# EUROPEAN PATENT APPLICATION

(11) **EP 4 745 755 A1**
(43) Date of publication of application: **20.05.2026**
(21) Application number: 25154126.4
(22) Date of filing: 27.01.2025
(51) Int. Cl.: G06F 7/58

(54) **EMBEDDED QUANTUM RANDOM NUMBER GENERATOR (QRNG) BASED DEVICES**

(30) Priority: 15.11.2024 US 202418948888
(71) Applicant: II-VI Delaware, Inc., Wilmington, DE 19890 (US)
(72) Inventor: TEISSIER, Jean, Wilmington 19890 (US); BOUCART, Julien, Wilmington 19890 (US)
(74) Representative: Schmidt, Christian

(57) **Abstract**

Systems and methods are provided for implementing and utilizing embedded quantum random number generator (QRNG) based devices. An optical device configured for use in quantum random number generation may have an integrated structure that includes, at least, an optical source configured to emit a light beam, a photodetector configured to detect light based on detection criteria, and a polarizer disposed between the optical source and the photodetector. The optical source, the photodetector, and the polarizer are directly integrated or embedded into the integrated structure. The polarizer is configured to process light based on polarization criteria that include passing or discarding light having a particular polarization. The optical device is configured for use in facilitating or enabling quantum random number generation based on detection of the light beam by the photodetector based on the detection criteria.

## Description

### TECHNICAL FIELD

Aspects of the present disclosure relate to optical communication based solutions. More specifically, various implementations based on the present disclosure relate to methods and systems for implementing and utilizing embedded quantum random number generator (QRNG) based devices.

### BACKGROUND

Limitations and disadvantages of conventional random number generators will become apparent to one of skill in the art, through comparison of such systems with some aspects of the present disclosure as set forth in the remainder of the present application with reference to the drawings.

### BRIEF SUMMARY

System and methods are provided for embedded quantum random number generator (QRNG) based devices, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF THE DRAWINGS

Fig. 1 illustrates an example system incorporating a quantum random number generator (QRNG).
Fig. 2 illustrates an example integrated vertical-cavity surface-emitting laser (VCSEL) based quantum random number generator (QRNG) device.
Fig. 3 illustrates an example integrated edge-emitting laser (EEL) based quantum random number generator (QRNG) device.

### DETAILED DESCRIPTION

The present disclosure is directed to optical devices related solutions. In particular, implementations based on the present disclosure are directed to enhanced solutions for quantum random number generation based systems or devices. In this regard, random number generation is a process by which one or more (e.g., sequence of) numbers or the like are generated in a manner where these numbers cannot be reasonably predicted, at least no better than when the numbers are generated at random. The random number generation is typically done using a random number generator (RNG). In this regard, random number generators may be hardware based components in which the random number generation may be performed or done based on and/or as a function of a current value of some attribute (e.g., physical attribute) that is constantly changing in a manner that is practically impossible to model. For quantum random number generation, the attribute used for the random number generation process may be quantum phenomena associated with and/or tracked in the component. Such component may be referred to as quantum random number generator (QRNG).

Solutions based on the present disclosure provide more compact and cost-effective QRNGs, particularly by use of polarization based modules incorporating optimized packaging designs. In this regard, in such packaging designs a suitable light emitter component may be combined with other required components, particularly for facilitating polarization based detections. In various implementations, the light emitter component may comprise vertical-cavity surface-emitting laser (VCSEL) based device or an edge emitting laser (EEL) based device. Nonetheless, while various embodiments are described herein as being VCSEL or EEL based implementations, the disclosure is not limited to use of such light emitters, and any suitable light emitter component may be used so long as it may be configured to provide light emission with suitable polarization characteristics (e.g., optical mode competition).

For example, in a VCSEL based implementation, the polarization of the light emitted by the VCSEL may be used in facilitating quantum random number generation. In this regard, VCSELs without any polarization stabilizing features may usually flip between polarizations at certain drive conditions. If such VCSEL is operated carefully at this point, mode competition of the lasing polarization for each pulse may be considered quantum in nature. The operating condition may be carefully tuned (e.g., via current level), such that the polarization selection may provide around 50/50 probability. Thus, utilizing a polarizer set at the correct orientation, followed by a photodetector (e.g., photodiode), may be a means of providing random quantum generated bits. EEL based designs may operate in a substantially similar manner, with mode selection based on the polarization of the light emitted by the EEL being similarly used providing or otherwise facilitating quantum-like random number generation.

However, polarization-based QRNG modules may need to meet particularly challenging requirements. For example, the height and size of the package may be extremely challenging, particularly for certain consumer applications. As such, packages may be too bulky if their size or height exceeds certain value(s) (e.g., in the range of 5 mm in thickness). Further, cost and parallelization may also be issues, such as for certain consumer applications and/or certain operational requirements (e.g., high throughput entropy data rates) that may be required. Conventional packaging designs, if any exist, may not be suitable for meeting such requirements.

Accordingly, in various example embodiments based on the present disclosure, enhanced polarization-based QRNG modules are provided, with such modules incorporating optimized packaging designs, namely by incorporating the light emitter and the other required components into integrated structures. Such integrated structures yield a smaller footprint and reduced costs compared to any existing solutions.

Example embodiments in accordance with the present disclosure, and details relating thereto, are illustrated in and described below with respect to the figures.

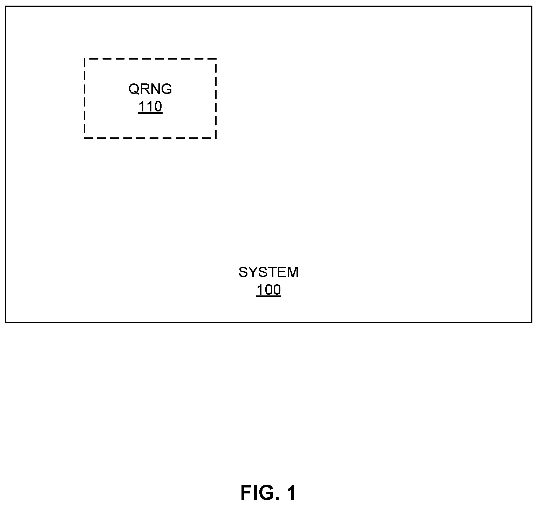

Fig. 1 illustrates an example system incorporating a quantum random number generator (QRNG). Shown in Fig. 1 is system 100.

The system 100 may comprise suitable circuitry configured for performing various functions and/or operations. For example, the functions and/or operations may comprise processing functions and/or operations, storage functions and/or operations, control functions and/or operations, communication functions and/or operations, and/or any combination thereof. As such, the circuitry in the system 100 may comprise processing circuitry, storage circuitry, control circuitry, communication circuitry, and/or any combination thereof.

In some instances, performing at least some of the functions and/or operations supported in the system 100 may require random number generation. As noted above, sometimes a dedicated component (random number generator (RNG)) may be used to provide or otherwise facilitate the random number generation. In this regard, various types of RNGs may be available or be used. One example type is the quantum random number generator (QRNG).

For example, as illustrated in Fig. 1, the system 100 comprises a quantum random number generator (QRNG) 110, which may be configured to perform quantum random number generation. In this regard, as noted above, with quantum random number generation, the random number generation process may be driven by quantum phenomena associated with and/or tracked in the component.

In accordance with the present disclosure, quantum random number generators (e.g., the QRNG 110) may be implemented using enhanced packaging designs. Specifically, as noted above, solutions based on the present disclosure provide compact and cost-effective QRNGs, particularly based on polarization build-up, such as by use of a polarization based modules for quantum random number generation, with such modules incorporating optimized packaging designs, namely by use of integrated structures.

In this regard, in some instances quantum random number generators may be implemented into relatively small modules (e.g., with free-space optics/mirrors and polarizers). Such small modules may use VCSELs as light sources. In this regard, the VCSEL may be used at a bistable point in polarization. As such, each pulse's polarization may be determined by quantum gain competition for stimulated emission. Accordingly, projecting the readout (e.g., using the polarizer and photodiode) may yield a value of '0' or a value of '1' that may be used in the random number generation process. As such, "quantum entropy" may offer one of the best types of quantum random number generator available.

Nonetheless, such a small module may still have some limitations and shortcomings. For example, while volume of such small modules may be relatively low (e.g., in range of 3x5x5 mm), such volume may still be relatively bulky, particularly for certain applications and/or platforms.

Solutions based on the present disclosure address such limitations and shortcomings, such as by allowing for further reduction in size without compromising performance. In particular, in various embodiments based on the present disclosure, quantum random number generators (e.g., the QRNG 110) may be implemented using polarization based modules with integrated structure. The integrated structure may be Silicon Nitride (SiN) or Silicon Photonics (SiP) based structures. Such integrated structure may be more desirable as it may be considerably more cost efficient compared to non-integrated structures. Further, in many instances, parallelization may be possible with such integrated structure based designs. The light source used in such integrated structures may be a vertical-cavity surface-emitting laser (VCSEL) or an edge-emitting laser (EEL). Nonetheless, any suitable light emitter may be used for providing light whose polarization may be used for quantum random number generation.

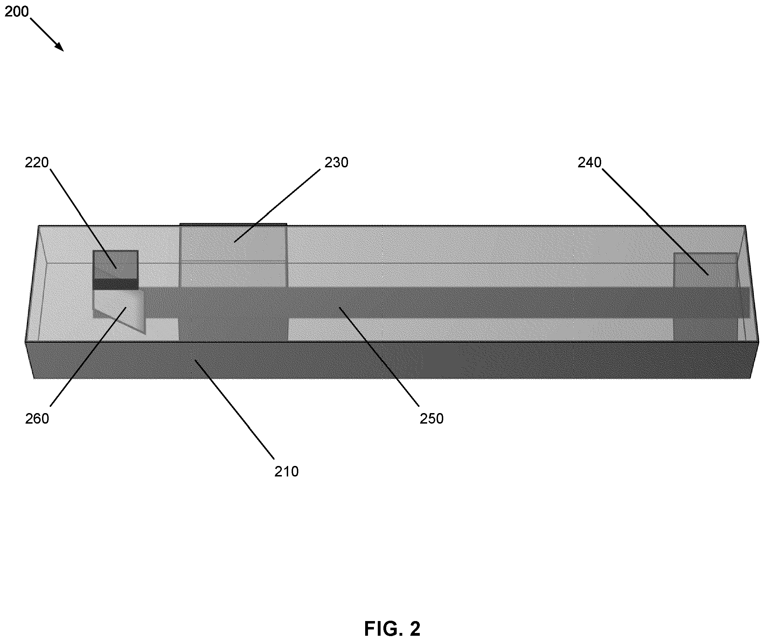

For example, in some example embodiments, a VCSEL based integrated structure is used. In this regard, in such implementations a VCSEL may be coupled into an optical waveguide structure (e.g., SiP or SiN based structure), further comprising a polarizer and a photodetector (PD) (e.g., a photodiode). The VCSEL may be integrated into the waveguide structure or hetero-integrated into it (e.g., coupled to it). The VCSEL may be placed in upside down configuration-that is, with the VCSEL placed on top of the waveguide structure but being configured to enable bottom (downward) emissions into the waveguide structure. To facilitate coupling of light within the waveguide structure, the VCSEL may be coupled with a suitable component (e.g., a grating, mirror, coupler etc.) integrated into the waveguide. The VCSEL may also comprise a structure in the emission window to facilitate the coupling (e.g., collimating lens or metalens, phase shifter, etc.). The VCSEL may be single-mode (SM) or multimode. In this regard, SM operation may be better for the polarizer, but the disclosure is not limited to use of SM based VCSELs. An example VCSEL based integrated structure is illustrated in and described in more detail with respect to Fig. 2.

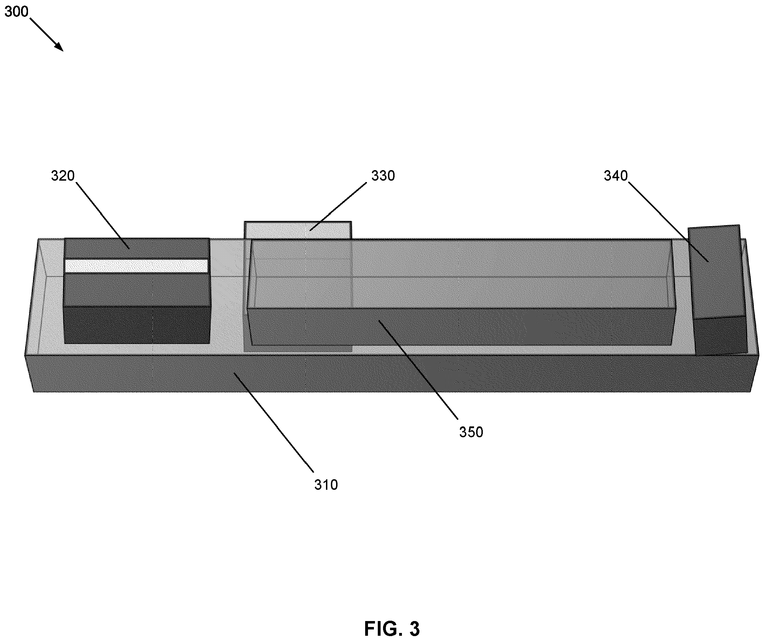

In some other example embodiments, a light emitter source configured for emitting light sideways may be used. This may comprise an edge-emitting laser (EEL), or may even be a VCSEL that is arranged in a manner to enable sideways emissions (e.g., with the VCSEL flipped 90°, and disposed on the side of the integrated structure, with its emitting top-side positioned against the waveguide). Coupling in such embodiments may be done either directly, using butt-coupling, or with a waveguide adapter to increase the coupling. In some instances, lensed coupling may also be possible. An example EEL based integrated structure is illustrated in and described in more detail with respect to Fig. 3.

In various embodiments, the polarizer used in the integrated structure (including, e.g., both VCSEL based integrated structures (top-side or flipped), and EEL based integrated structures) may be a transverse electric/transverse magnetic (TE/TM) splitter configured to discard one polarization, or may utilize other polarizer scheme(s). In some instances, the polarizer may be configured to operate on a range of temperature and wavelength, which may be compatible with particular desired application(s).

In various embodiments, the detection performed by the photodetector may be done by use of a silicon germanium (SiGe) integrated photodiode, a hetero-integrated photodiode, or any other suitable detection design/scheme. Nonetheless, whatever design/scheme is used, the photodetector should only detect one polarization after the polarizer.

Fig. 2 illustrates an example integrated vertical-cavity surface-emitting laser (VCSEL) based quantum random number generator (QRNG) device. Referring to Fig. 2, there is shown vertical-cavity surface-emitting laser (VCSEL) based quantum random number generator (QRNG) device (referred to hereinafter simply as "device") 200.

As shown in the example embodiment illustrated in Fig. 2, the device 200 comprises a structure 210, a VCSEL 220, a polarizer 230, a photodetector (PD) 240, a waveguide 250, and a coupler 260.

The structure 210 may comprise a silicon nitride (SiN) or silicon photonics (SiP) material providing a structure into which the remaining components are integrated or embedded.

The VCSEL 220 may comprise a semiconductor laser diode based structure, configured to provide laser beam emission perpendicular from a top surface of the semiconductor structure. Within the device 200, the VCSEL 220 is arranged in epi-down manner-that is, to allow for emitting light downwards, into the structure 210. VCSEL 220 may be of any suitable type. In this regard, various types of VCSEL may be used, and the disclosure is not limited to particular type, and as such any suitable VCSEL may be used. A VCSEL with a bottom side emission may also be used.

For example, the VCSEL 220 may comprise a distributed Bragg reflector (DBR) based structure, which may be configured to function with mirrors parallel to the top surface, and with an active region comprising one or more quantum wells for the laser light generation in between. One DBR structure may be disposed on top of a substrate layer and heat sink layer. The planar DBR-mirrors may comprise layers with alternating high and low refractive index (RI) based material. The thickness of each layer may be set to yield high reflectivity. For example, a thickness of a quarter of the laser wavelength in the material may yield optical reflectivities above 99%. Use of high reflectivity may be used to balance short axial length of the gain region. In some implementations, p-type and n-type regions may be embedded between the DBR-mirrors, forming a diode junction. This may involve more complex semiconductor processing to ensure electrical contact to the active layer/region, but may eliminate electrical power loss in the DBR structure. Nonetheless, the disclosure is not limited to any particular VCSEL design or implementation, and any suitable design or implementation may be used.

The polarizer 230 may comprise suitable material for providing polarization selection-that is, selectively passing or otherwise handling based on polarization propagation of radiant energy, particularly light (e.g., laser emitted by the VCSEL 220), as described herein. The polarizer 230 may be integrated within the structure itself (e.g., within the structure 210, particularly within the waveguide 250 where one is used, or directly into the photodetector 240).

The photodetector (PD) 240 may comprise suitable circuitry for detecting light or other electromagnetic radiation. In this regard, various mechanisms and/or techniques may be used in providing the detection functions provided by the photodetectors, such as using photoelectric or photochemical effects, spectral response, etc., and the disclosure is not limited to any particular type or mechanism. In an example implementation, the PD 240 may comprise a photodiode. The PD 240 may be integrated or embedded within the structure itself (e.g., the structure 210), as shown in the embodiment illustrated in Fig. 2. Alternatively, the PD 240 may be a separate structure that is coupled (or otherwise attached) to the structure (e.g., at the end of the structure), where the emitted light would end up after passing through the polarizer.

The waveguide 250 may comprise suitable material that may allow for propagation of radiant energy, particularly light (e.g., laser light emitted by the VCSEL 220). As noted above, the waveguide 250 may be a SiP or SiN optical waveguide. In some instances, at least portions of the waveguide 250 may be omitted, such as portions between the other components in the integrated structure, with these components (the coupler 260, the polarizer 230, and the PD 240) attached directedly to one another. In some instances, the waveguide 250 as a whole may be omitted. Such omission may be possible where the integrated structure may allow propagation of the emitted light into the polarizer 230 (from the coupler 260), and then out of the polarizer 230 and into the PD 240.

The coupler 260 may comprise suitable material for coupling the light from the VCSEL 220 into the propagation path within the integrated structure (e.g., the waveguide 250). In this regard, the coupler 260 may comprise suitable material that may allow for reflecting of radiant energy, particularly light. The coupler 260 may be arranged to enable, for example, reflecting light emitted downwards by the VCSEL 220 such that the light may propagate through the waveguide 250. For example, the coupler 260 may comprise a mirror arranged at 45° angle to provide the required reflection. Nonetheless, the disclosure is not limited to mirror-like components, and as such any suitable component, using any suitable technique, which provides the required handling (e.g., reflecting) of light emitted by the VCSEL 220 for propagation within the waveguide 250, may be used.

In example operation, the device 200 may be used in providing and/or supporting quantum random number generation. In this regard, during such operations the VCSEL 220 may emit light downwards, which is then reflected sideways via the coupler 260, to propagate within the waveguide 250. Polarization selection based on the emitted light may then be used, e.g., in facilitating quantum random number generation. In this regard, as noted above, polarization selection-that is, mode selection of polarization-may be considered quantum in nature. As such, the polarization of the light emitted by the VCSEL 220 may be used as quantum phenomena for driving quantum random number generation. To that end, the polarizer 230 may be used in providing the polarization selection applied to the light emitted by the VCSEL 220, such as when the emitted light propagates through the polarizer 230, with the PD 240 then providing the polarization based detection based on the polarization-selected output of the polarizer 230-e.g., providing indications of the different quantum states in response to detecting (or not) light that is passed (or block) by the polarizer 230.

Use of integrated structures, such as the VCSEL based integrated structure of the device 200, may yield improved devices. In this regard, as illustrated in Fig. 2, VCSEL based integrated structures (e.g., similar to the one used in the device 200) may be very compact, particularly in the z-direction (that is, considerably thinner than any existing designs. In addition, some of the components may be integrated and/or embedded together (e.g., the polarizer may be embedded within the waveguide) for added integration. Further, such structures may be more easily integrated on chipsets. These characteristics result in very compact and cost-effective devices.

However, one potential issue with VCSEL based integrated structures is the possibility of high level of feedback into the VCSEL. Accordingly, in some instances, VCSEL based integrated structures may be configured (e.g., by adjusting various component(s) thereof) to account for and mitigate such issues.

Fig. 3 illustrates an example integrated edge-emitting laser (EEL) based quantum random number generator (QRNG) device. Referring to Fig. 3, there is shown edge-emitting laser (EEL) based quantum random number generator (QRNG) device (referred to hereinafter simply as "device") 300.

As shown in the example embodiment illustrated in Fig. 3, the device 300 comprises a structure 310, a quantum-well (QW) laser 320, a polarizer 330, a photodetector (PD) 340, and a waveguide 350.

The structure 310 may comprise a silicon nitride (SiN) or silicon photonics (SiP) material providing a structure into which the remaining components are integrated or embedded.

The QW laser 320 may comprise a semiconductor laser diode based structure, configured to provide laser beam emission from a side (edge) of the semiconductor structure. In particular, the semiconductor laser may comprise one or more thin layers of low bandgap material sandwiched between high bandgap layers (e.g., including an n-type layer and a p-type layer), resulting in the thin layer or layers acting as quantum wells, thus facilitating edge emission. The QW laser 320 may be an unstrained QW laser.

The polarizer 330 may comprise suitable material for providing polarization selection-that is, selectively passing or otherwise handling based on polarization propagation of radiant energy, particularly light (e.g., laser emitted by the QW laser 320), as described herein. The polarizer 330 may be integrated within the structure itself (e.g., within the structure 310, particularly within the waveguide 350 where one is used).

The photodetector (PD) 340 may comprise suitable circuitry for detecting light or other electromagnetic radiation. In this regard, various mechanisms and/or techniques may be used in providing the detection functions provided by the photodetectors, such as using photoelectric or photochemical effects, spectral response, etc., and the disclosure is not limited to any particular type or mechanism. In an example implementation, the PD 340 may comprise a photodiode. The PD 340 may be integrated or embedded within the structure itself (e.g., the structure 310). Alternatively, the PD 340 may be a separate structure that is coupled (or otherwise attached) to the structure (e.g., at the end of the waveguide 350), as shown in the embodiment illustrated in Fig. 3.

The waveguide 350 may comprise suitable material that may allow for propagation of radiant energy, particularly light (e.g., laser light emitted by the QW laser 320). As noted above, the waveguide 350 may be a SiP or SiN optical waveguide. As shown in the embodiment illustrated in Fig. 3, the waveguide 350 may be disposed on top of the structure 310. This is done because quantum-well (QW) lasers (e.g., the QW laser 320 as shown in Fig. 3) may typically incorporate the quantum-well on the top-side of the laser device, thus necessitating adding the waveguide 350 on top the structure 310 to provide a propagation path. The disclosure is not limited to such design, however. For example, in some instances, the QW laser 320 may be flipped and embedded, at least partially, into the structure 310. In such structures, the waveguide 350 may be embedded or integrated into the structure 310.

In example operation, the device 300 may be used in providing and/or supporting quantum random number generation. In this regard, during such operations the QW laser 320 may emit light sideways, thus propagating directly with the waveguide 350. Polarization selection based on the emitted light may then be used, e.g., in facilitating quantum random number generation. In this regard, as noted above, polarization selection-that is, mode selection of polarization-may be considered quantum in nature. As such, the polarization of the light emitted by the QW laser 320 may be used as quantum phenomena for driving quantum random number generation. To that end, the polarizer 330 may be used in providing the polarization selection applied to the light emitted by the QW laser 320, such as when the emitted light propagates through the polarizer 330, with the PD 340 then providing the polarization based detection based on the polarization-selected output of the polarizer 330-e.g., providing indications of the different quantum states in response to detecting (or not) light that is passed (or blocked) by the polarizer 330.

Use of integrated structures, such as the EEL based integrated structure of the device 300, may yield improved devices. In this regard, as illustrated in Fig. 3, EEL based integrated structures (e.g., similar to the one used in the device 300) may be very compact, particularly in the z-direction (that is, considerably thinner than any existing designs. In addition, some of the components may be integrated and/or embedded together (e.g., the polarizer may be embedded within the waveguide) for added integration. Further, such structures may be more easily integrated on chipsets. These characteristics result in very compact and cost-effective devices.

However, one potential issue with EEL based integrated structures is that there may be no means for controlling the mode competition, under some conditions, such as where the EEL starts to get away from the mode degeneracy between TE and TM modes (e.g., due to effects of heating or strain). Accordingly, in some instances, EEL based integrated structures may be configured (e.g., by adjusting various component thereof) to account for and mitigate such issues.

In some example embodiments, the polarizer used in integrated structures implemented based on the present disclosure may be a splitter (rather than configured for selecting/passing only particular polarization), and both polarizations may be recorded on different photodiodes. This may allow for more careful monitoring the distribution.

In some example embodiments, the light source used in integrated structures implemented based on the present disclosure may comprise an unstrained EEL that may have mixed TE and TM polarization, such as if carefully designed.

In some example embodiments, the waveguide used in integrated structures implemented based on the present disclosure may be configured or otherwise used in performing to perform a *g⁽¹⁾* like autocorrelation method, and use this to prove the "quantumness" of the distribution.

In some example embodiments, a plurality of integrated structures may be used. The plurality of integrated structures may be parallelized-e.g., with an array of VCSELs or EELs, coupled to an array of waveguides/polarizers/PDs. Use of such parallelized approach may allow for increasing the entropy generation using a very small footprint.

An optical device, in accordance with the present disclosure, is configured for use in quantum random number generation, with the optical device comprising an integrated structure that comprises: an optical source configured to emit a light beam; a photodetector configured to detect light based on detection criteria; and a polarizer disposed between the optical source and the photodetector; where the optical source, the photodetector, and the polarizer are directly integrated or embedded into the integrated structure; where the polarizer is configured to process light based on polarization criteria, with the polarization criteria comprising passing or discarding light having a particular polarization; and where the optical device is configured for use in facilitating or enabling quantum random number generation based on detection of the light beam by the photodetector based on the detection criteria.

In an example embodiment, the integrated structure comprises silicon nitride (SiN) or silicon photonics (SiP) material.

In an example embodiment, the integrated structure further comprises an optical waveguide.

In an example embodiment, the optical waveguide is configured to provide an optical path from the optical source, through the polarizer, and to the photodetector.

In an example embodiment, the polarizer is embedded or integrated into the optical waveguide.

In an example embodiment, the integrated structure further comprises a coupler configured to couple the optical source.

In an example embodiment, the coupler comprises is configured to adjust direction of the light beam emitted by the optical source.

In an example embodiment, the coupler comprises a mirror configured to reflect the light beam emitted by the optical source.

In an example embodiment, the photodetector comprises a photodiode.

In an example embodiment, the photodiode comprises a silicon germanium (SiGe) integrated photodiode or a hetero-integrated photodiode.

In an example embodiment, the photodiode is configured to only detect one polarization.

In an example embodiment, the polarizer comprises a transverse electric/transverse magnetic (TE/TM) splitter.

In an example embodiment, the polarizer is configured to record polarizations of both passed and blocked light.

In an example embodiment, the polarizer is configured to operate on a pre-defined range of temperatures and/or wavelengths compatible with one or more particular applications.

In an example embodiment, the optical source comprises a vertical-cavity surface-emitting laser (VCSEL).

In an example embodiment, the vertical-cavity surface-emitting laser (VCSEL) is disposed in upside down configuration on a top-side of the integrated structure, to emit the light beam downwards into the integrated structure.

In an example embodiment, the vertical-cavity surface-emitting laser (VCSEL) is disposed on a side of the integrated structure, and wherein the vertical-cavity surface-emitting laser (VCSEL) is flipped 90° to emit the light beam downwards into the integrated structure.

In an example embodiment, the optical source comprises an edge-emitting laser (EEL).

In an example embodiment, the edge-emitting laser (EEL) is coupled directly, using butt coupling, using a waveguide adapter, or using lensed coupling.

In an example embodiment, the edge-emitting laser (EEL) comprises an unstrained EEL emitting light with mixed transverse electric (TE) and transverse magnetic (TM) polarizations.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

As utilized herein the terms "circuits" and "circuitry" refer to physical electronic components (e.g., hardware), and any software and/or firmware ("code") that may configure the hardware, be executed by the hardware, and or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may, for example, operate on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not enabled (e.g., by a user-configurable setting, factory trim, etc.).

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Various embodiments in accordance with the present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

The present disclosure claims the priority of U.S. application 18/948,888 filed on November 15, 2024. The entire disclosure of this application is hereby explicitly incorporated by reference into the present disclosure.

Implementations disclosed herein may relate to the following: Systems and methods are provided for implementing and utilizing embedded quantum random number generator (QRNG) based devices. An optical device configured for use in quantum random number generation may have an integrated structure that includes, at least, an optical source configured to emit a light beam, a photodetector configured to detect light based on detection criteria, and a polarizer disposed between the optical source and the photodetector. The optical source, the photodetector, and the polarizer are directly integrated or embedded into the integrated structure. The polarizer is configured to process light based on polarization criteria that include passing or discarding light having a particular polarization. The optical device is configured for use in facilitating or enabling quantum random number generation based on detection of the light beam by the photodetector based on the detection criteria.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. The aspects are:
1. An optical device configured for use in quantum random number generation, the optical device comprising:
   an integrated structure that comprises:
      an optical source configured to emit a light beam;
      a photodetector configured to detect light based on detection criteria; and
      a polarizer disposed between the optical source and the photodetector;
   wherein the optical source, the photodetector, and the polarizer are directly integrated or embedded into the integrated structure;
   wherein the polarizer is configured to process light based on polarization criteria, the polarization criteria comprising passing or discarding light having a particular polarization; and
      wherein the optical device is configured for use in facilitating or enabling quantum random number generation based on detection of the light beam by the photodetector based on the detection criteria.
2. The optical device according to aspect 1, wherein the integrated structure comprises silicon nitride (SiN) or silicon photonics (SiP) material.
3. The optical device according to aspect 1, wherein the integrated structure further comprises an optical waveguide.
4. The optical device according to aspect 3, wherein the optical waveguide is configured to provide an optical path from the optical source, through the polarizer, and to the photodetector.
5. The optical device according to aspect 3, wherein the polarizer is embedded or integrated into the optical waveguide.
6. The optical device according to aspect 1, wherein the integrated structure further comprises a coupler configured to couple the optical source.
7. The optical device according to aspect 6, wherein the coupler is configured to adjust direction of the light beam emitted by the optical source.
8. The optical device according to aspect 7, wherein the coupler comprises a mirror configured to reflect the light beam emitted by the optical source.
9. The optical device according to aspect 1, wherein the photodetector comprises a photodiode.
10. The optical device according to aspect 9, wherein the photodiode comprises a silicon germanium (SiGe) integrated photodiode or a hetero-integrated photodiode.
11. The optical device according to aspect 9, wherein the photodiode is configured to only detect one polarization.
12. The optical device according to aspect 1, wherein the polarizer comprises a transverse electric/transverse magnetic (TE/TM) splitter.
13. The optical device according to aspect 1, wherein the polarizer is configured to record polarizations of both passed and blocked light.
14. The optical device according to aspect 1, wherein the polarizer is configured to operate on a pre-defined range of temperatures and/or wavelengths compatible with one or more particular applications.
15. The optical device according to aspect 1, wherein the optical source comprises a vertical-cavity surface-emitting laser (VCSEL).
16. The optical device according to aspect 15, wherein the vertical-cavity surface-emitting laser (VCSEL) is disposed in upside down configuration on a top-side of the integrated structure, to emit the light beam downwards into the integrated structure.
17. The optical device according to aspect 15, wherein the vertical-cavity surface-emitting laser (VCSEL) is disposed on a side of the integrated structure, and wherein the vertical-cavity surface-emitting laser (VCSEL) is flipped 90° to emit the light beam downwards into the integrated structure.
18. The optical device according to aspect 1, wherein the optical source comprises an edge-emitting laser (EEL).
19. The optical device according to aspect 18, wherein the edge-emitting laser (EEL) is coupled directly, using butt coupling, using a waveguide adapter, or using lensed coupling.
20. The optical device according to aspect 18, wherein the edge-emitting laser (EEL) comprises an unstrained EEL emitting light with mixed transverse electric (TE) and transverse magnetic (TM) polarizations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. An optical device configured for use in quantum random number generation, the optical device comprising:
an integrated structure that comprises:
an optical source configured to emit a light beam;
a photodetector configured to detect light based on detection criteria; and
a polarizer disposed between the optical source and the photodetector;
wherein the optical source, the photodetector, and the polarizer are directly integrated or embedded into the integrated structure;
wherein the polarizer is configured to process light based on polarization criteria, the polarization criteria comprising passing or discarding light having a particular polarization; and
wherein the optical device is configured for use in facilitating or enabling quantum random number generation based on detection of the light beam by the photodetector based on the detection criteria.

2. The optical device according to claim 1, wherein
a) the integrated structure comprises silicon nitride (SiN) or silicon photonics (SiP) material and/or wherein
b) the integrated structure further comprises an optical waveguide and/or wherein
c) the integrated structure further comprises a coupler configured to couple the optical source.

3. The optical device according to claim 2, wherein the optical waveguide is configured to provide an optical path from the optical source, through the polarizer, and to the photodetector.

4. The optical device according to claim 2, wherein the polarizer is embedded or integrated into the optical waveguide.

5. The optical device according to claim 2, wherein the coupler is configured to adjust direction of the light beam emitted by the optical source.

6. The optical device according to any one of claims 2 to 5, wherein the coupler comprises a mirror configured to reflect the light beam emitted by the optical source.

7. The optical device according to any one of claims 1 to 6, wherein the photodetector comprises a photodiode, wherein, optionally, the photodiode comprises a silicon germanium (SiGe) integrated photodiode or a hetero-integrated photodiode.

8. The optical device according to claim 7, wherein the photodiode is configured to only detect one polarization.

9. The optical device according to any one of claims 1 to 8, wherein the polarizer comprises a transverse electric/transverse magnetic (TE/TM) splitter.

10. The optical device according to any one of claims 1 to 9, wherein the polarizer is configured to record polarizations of both passed and blocked light.

11. The optical device according to any one of claims 1 to 10, wherein the polarizer is configured to operate on a pre-defined range of temperatures and/or wavelengths compatible with one or more particular applications.

12. The optical device according to any one of claims 1 to 11, wherein the optical source comprises a vertical-cavity surface-emitting laser (VCSEL), wherein, optionally, the vertical-cavity surface-emitting laser (VCSEL) is disposed in upside down configuration on a top-side of the integrated structure, to emit the light beam downwards into the integrated structure.

13. The optical device according to claim 12, wherein the vertical-cavity surface-emitting laser (VCSEL) is disposed on a side of the integrated structure, and wherein the vertical-cavity surface-emitting laser (VCSEL) is flipped 90° to emit the light beam downwards into the integrated structure.

14. The optical device according to any one of claims 1 to 13, wherein the optical source comprises an edge-emitting laser (EEL), wherein, optionally, the edge-emitting laser (EEL) is coupled directly, using butt coupling, using a waveguide adapter, or using lensed coupling.

15. The optical device according to claim 14, wherein the edge-emitting laser (EEL) comprises an unstrained EEL emitting light with mixed transverse electric (TE) and transverse magnetic (TM) polarizations.
